# EUROPÄISCHE PATENTSCHRIFT

(11) **EP 2 652 451 B1**
(45) Veröffentlichungstag und Bekanntmachung des Hinweises auf die Patenterteilung: **21.01.2015**
(21) Anmeldenummer: 11781762.7
(22) Anmeldetag: 19.10.2011
(51) Int. Cl.: G01F 11/28, B65B 1/38

(54) **PULVERDOSIERVORRICHTUNG SOWIE PULVERDOSIERVERFAHREN**
POWDER DOSING DEVICE AND PROCESS
DISPOSITIF ET PROCÉDÉ DE DOSAGE DE POUDRES

(30) Priorität: 15.12.2010 DE 102010054649
(43) Veröffentlichungstag der Anmeldung: 23.10.2013
(73) Patentinhaber: Fydec Holding AG, 1024 Ecublens (CH)
(72) Erfinder: DIETRICH, Frédéric, Jun., CH-1054 Morrens (CH)
(74) Vertreter: Wagner, Kilian
(86) Internationale Anmeldenummer: PCT/EP2011/068262
(87) Internationale Veröffentlichungsnummer: WO 2012/079809

(56) Entgegenhaltungen:
- DE-U1- 20 320 604
- GB-A- 2 184 709
- US-A- 4 640 448
- US-A1- 2006 180 609

## Beschreibung

Die Erfindung betrifft eine Pulverdosiervorrichtung gemäß dem Oberbegriff des Anspruchs 1, umfassend eine ein Pulverdosiervolumen definierende Dosierkammer, die durch eine Auslassöffnung hindurch entleerbar ist, wobei die Dosierkammer zum Ansaugen von Pulver aus einer Pulverzuführleitung durch eine die Dosierkammer begrenzende Membran hindurch mit Unterdruck beaufschlagbar ist.

Ferner betrifft die Erfindung ein Pulverdosierverfahren gemäß Anspruch 15, insbesondere zum Betreiben einer nach dem Konzept der Erfindung ausgebildeten Pulverdosiervorrichtung, wobei Pulver mit Hilfe von Unterdruck in eine von einer Membran begrenzte, eine Auslassöffnung aufweisende Dosierkammer angesaugt wird.

Aus der EP 0 937 004 B2 der Anmelderin sind eine Vorrichtung und ein Verfahren zum pneumatischen Fördern von Pulver bekannt, wobei die Vorrichtung eine zylindrische Kammer aufweist, in die Pulver aus einer Pulverzuleitung mit Hilfe von Unterdruck ansaugbar ist, wobei die Dosierkammer durch die Membran hindurch mit Unterdruck versorgt wird. Die stationär angeordnete Membran hat dabei die Aufgabe zu verhindern, dass Pulver in die Unterdruckleitung angesaugt wird. Die Kammer wird dabei vor dem Entleeren bei der Ansaugphase nicht vollständig mit Pulver befüllt. Bei der bekannten Vorrichtung handelt es sich um eine Transportvorrichtung mit einem vorgegebenen Kammervolumen, bei welcher das angesaugte Pulver ausschließlich über eine Druckluftbeaufschlagung der Kammer durch eine untere Auslassöffnung hindurch entleert wird. Insbesondere dann, wenn die Ansaugzeit für das Pulver sehr lange gewählt und in der Folge das Pulver in der Kammer stark verdichtet würde, wäre mit Schwierigkeiten beim Entleeren der Kammer zu rechnen.

Aus der EP 0 789 230 B1 der Anmelderin ist eine komplex aufgebaute Dosiervorrichtung zum Dosieren von Pulvern bekannt, bei welcher das Dosiervolumen einstellbar ist.

Eine Pulverdosiervorrichtung mit einer hängend angeordneten flexiblen Membran ist in der US 3,391,963 beschrieben. Die Membran ist an einem Kolben arretiert der zusammen mit der Membran beim Befüllen der Pumpenkammer mit Pulver axial verstellt wird. Beim Entleeren der Kammer erfolgt eine Verstellung in die entgegengesetzte Richtung und ein resultierender Schlag sorgt dafür, dass an der Membran anhaftendes Pulver abgeschüttelt wird.

Weitere Pulverdosiervorrichtungen sind in der EP 1 790 958 A1, der WO 02/02168 A1, der EP 0 937 004 B2 sowie der EP 0 789 230 B1 beschrieben.

Aus der DE 203 20 604 U1 ist eine Pulverdosiervorrichtung mit einer Dosierkammer bekannt, wobei ein Pulverdosiervolumen durch eine Auslassöffnung hindurch entleerbar ist. Die Pulverdosiervorrichtung umfasst eine an einen Membranhalter gehaltene Membran, die zusammen mit dem Membranhalter relativ zu der Auslassöffnung verstellbar ist. Der Membranhalter ist beim Relativverstellen gegenüber der Umfangswand der Dosierkammer durch eine separate Elastomerdichtung abgedichtet.

Die GB 2 184 709 A zeigt ebenfalls eine Pulverdosiervorrichtung, bei welcher eine Abdichtung über eine O-Ring gelöst ist.

Aus der US 2005/196287 A1 ist ein Injektionssystem für Pulver bekannt, bei welchem eine flexible Zylinderwand vorgesehen ist, die dichtend an einem Kolben anliegt und sich beim Verstellen des Kolbens verformt.

Als weiteren Stand der Technik wird die US 2006/180609 A1 sowie die US 4,640,448 A verwiesen.

Ausgehend von dem vorgenannten Stand der Technik liegt der Erfindung die Aufgabe zugrunde, eine möglichst einfach aufgebaute Pulverdosiervorrichtung zum exakten Volumendosieren von pulverförmigen Stoffen anzugeben, bei der das Pulverdosiervolumen auf einfache Weise einstellbar ist und/oder bei der Entleerungsprobleme sicher vermieden werden.

Ferner besteht die Aufgabe darin, ein entsprechend verbessertes Verfahren zum Betreiben einer Pulverdosiervorrichtung anzugeben.

Die Aufgabe wird hinsichtlich der Pulverdosiervorrichtung mit den Merkmalen des Anspruchs 1 und hinsichtlich des Verfahrens mit den Merkmalen des Anspruchs 15 gelöst.

Vorteilhafte Weiterbildungen der Erfindung sind in den Unteransprüchen angegeben. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt zunächst die Überlegung zugrunde, dass es für eine exakte Dosierung vorteilhaft ist, wenn die Dosierkammer durch eine ausreichend lange Ansaugzeit vollständig mit Pulver aus einer Pulverzuleitung befüllt wird. Hieraus ergibt sich jedoch das Problem einer vergleichsweise hohen Verdichtung des Pulvers in der Dosierkammer mit entsprechenden wiederum daraus resultierenden Entleerungsproblemen. Ferner wurde erkannt, dass es für gewisse Dosieranwendungen vorteilhaft ist, wenn mit einer Dosiervorrichtung nicht immer nur eine bestimmte, vorgegebene (unveränderliche) Pulvermenge dosierbar ist, sondern wenn das zu dosierende Pulvervolumen einstellbar ist.

Zur Lösung zumindest eines der vorgenannten Probleme, bevorzugt beider Probleme schlägt die Erfindung vor, die die Dosierkammer, vorzugsweise an einer von der Auslassöffnung abgewandten Seite, begrenzende Membran, die in erster Linie verhindern soll, dass Pulver in die Unterdruckversorgungsleitung angesaugt wird und in der Folge luftdurchlässig jedoch pulverundurchlässig ausgeführt ist, im Gegensatz zum Stand der Technik nicht stationär anzuordnen, sondern zusammen mit dem Membranhalter relativ verstellbar zu der Auslassöffnung der Dosierkammer, um gemäß einem ersten Aspekt mit Hilfe der Membran durch Verstellen der Membran (gemeinsam mit dem Membranhalter) in Richtung Auslassöffnung das angesaugte Pulvervolumen durch die Auslassöffnung herauszudrücken und/oder gemäß einem zweiten Aspekt das Pulverdosiervolumen und damit das Dosierkammervolumen verändern bzw. möglichst exakt einstellen zu können, in dem die Position, die die Membran beim Ansaugvorgang relativ zur Auslassöffnung einnimmt veränderbar ist. Grundsätzlich ist es möglich, bei einer Pulverdosiervorrichtung nur einen der vorgenannten beiden Aspekte zu realisieren, wobei es bevorzugt ist, wenn beide Aspekte realisiert sind.

Der Membran ist ein, vorzugsweise kolbenartiger, Membranhalter zugeordnet, an welchem die Membran fixiert ist. Dabei wird die Membran vorzugsweise durch Verstellen des Membranhalters relativ zur Auslassöffnung verstellt. Der Membranhalter kann einteilig ausgebildet sein, ist jedoch bevorzugt mehrteilig ausgebildet, insbesondere derart, dass die Membran zwischen zwei, insbesondere in axialer Richtung miteinander verschraubbaren Membranhalterteilen geklemmt ist. Der Membranhalter kann gemäß einer ersten Alternative unmittelbar Teil des Aktors, insbesondere eines Kolben-/Zylinderantriebs zum Verstellen der Membran sein oder gemäß einer zweiten Alternative mit einem solchen Aktor, durch eine mechanische Kopplung wirkverbunden sein. Die Membranhalterteile können beispielsweise miteinander verschraubt sein, miteinander verklebt, oder verpresst, oder verschweißt, oder auf andere Weise aneinander festgelegt sein.

Um zu verhindern, dass Pulver in einen Bereich radial zwischen den Membranhalter und einer Umfangswand der Dosierkammer angesaugt wird und/oder in einen auf einer von der Dosierkammer abgewandte Seite des Membranhalters gelegenen Bereich ist der Membranhalter beim Relativverstellen der Membran gegenüber der, bevorzugt kreiszylindrisch konturierten, Umfangswand der Dosierkammer abgedichtet ist. Erfindungsgemäß ist vorgesehen, dass die Dichtwirkung allein durch die Wahl der Materialkombination des Materials des Membranhalters und der Umfangswand erreicht wird, so dass auf separate Elastomerdichtungen verzichtet werden kann.

Dies kann dadurch realisiert werden, dass die Umfangswand der Dosierkammer aus einem elastischeren Material ausgebildet ist als der Membranhalter. Bevorzugt ist die Dosierkammerumfangswand hierzu aus Kunststoff, insbesondere PTFE, und der Membranhalter beispielsweise aus Metall ausgebildet. Die umgekehrte Konfiguration (metallische Umfangswand/Kunststoffmembranhalter) ist alternativ realisierbar.

Noch weiter bevorzugt ist es, insbesondere bei einer elastomerringdichtungsfreien Ausführungsvariante, wenn der Membranhalter sich über einen, bevorzugt metallischen, Ringabschnitt, vorzugsweise über mindestens zwei in einer Verstellrichtung der Membran (insbesondere eine Längsachsrichtung einer zylindrischen Dosierkammer) beabstandete Ringabschnitte an der Umfangswand abstützt bzw. mit Hilfe dieses mindestens einen Ringabschnittes entlang der Umfangswand (dichtend) gleitet.

Der Membranhalter ist ein von der Dosierkammer separates Bauteil und vorzugsweise ist die Membran ausschließlich an dem Membranhalter (und nicht an der Dosierkammerwandung) festgelegt. Bevorzugt ist die Membran mit ihrem Außenumfangsrand am Membranhalter festgelegt. Beim Verstellen des Membranhalters wird die gesamte Membran mit diesem zusammen verstellt.

Der Grad bzw. die Höhe des Vakuums (Unterdruck) mit dem die Dosierkammer beaufschlagt wird, kann bevorzugt an unterschiedliche Pulver angepasst werden - es sollte bevorzugt ausreichen, um die Dosierkammer vollständig durch Ansaugen von Pulver mit Pulver befüllen zu können.

Insbesondere für den Fall, dass die Dosierkammer nicht mittels der Membran durch Herausdrücken des Pulvers entleerbar ausgebildet ist, kann das angesaugte Pulver bevorzugt, beispielsweise ausschließlich, mit Druckluft aus der Dosierkammer entleert werden. Bei Bedarf kann Druckluft auch unterstützend eingesetzt werden, wenn die Membran zum Entleeren der Kammer vorgesehen bzw. verstellbar angeordnet ist. Auch kann ein Druckluftanschluss vorgesehen sein, um die Membran von anhaftendem Pulver zu befreien. Bevorzugt kann die Höhe des Drucks eingestellt werden.

Besonders zweckmäßig ist es, wenn die Pulverzuleitung, um ein vollständiges Befüllen der Dosierkammer während der Pulver-Ansaugphase zu ermöglichen, möglichst nahe eines Kammerbodens bzw. eines von der Membran abgewandten Kammerendes in die Dosierkammer einmündet, was beispielsweise dadurch realisiert werden kann, dass die Pulverzuleitung unmittelbar oberhalb der Dosierkammer-Auslassöffnung in die Dosierkammer mündet oder alternativ dadurch, dass Pulver während der Ansaugphase, wie später noch erläutert werden wird, durch die Auslassöffnung hindurch angesaugt wird.

Im Hinblick auf die Ausbildung der Membran gibt es unterschiedlichste Möglichkeiten. Hauptaufgabe der Membran ist es, das Dosierkammervolumen zu begrenzen und gleichzeitig ein Ansaugen von Pulver durch die vorzugsweise starre Membran in Richtung Unterdruckversorgung zu vermeiden, wodurch die Membran in an sich bekannter Weise so beschaffen sein muss, dass diese zwar für Luft, zumindest bei entsprechender Druckdifferenzbeaufschlagung durchlässig, jedoch für Pulver, zumindest weitgehend, vorzugsweise vollständig undurchlässig ist. Als besonders zweckmäßig hat es sich erwiesen, wenn die Membran eine Stützschicht, beispielsweise eine Filzschicht oder ein Drahtgerüst aufweist, auf der dem auf der der Dosierkammerinnenseite zugewandten Seite die eigentliche Filterschicht angeordnet ist.

Im Hinblick auf die konkrete Realisierung der Ansaugposition der Membran, d.h. der Relativposition der Membran, die von der Membran während des Ansaugens von Pulver relativ zu der Auslassöffnung eingenommen wird, gibt es unterschiedliche Möglichkeiten. Grundsätzlich ist es in Weiterbildung der Erfindung vorgesehen und bevorzugt, dass die Einstellung stufenlos beispielsweise mittels eines Spindeltriebes realisiert ist, wobei gemäß einer alternativen Ausführungsvariante die Einstellung in diskreten Schritten (definierte Stufen), beispielsweise durch das Vorsehen von Rastungen, realisiert ist.

Eine besonders einfache wie effektive und wenig störanfällige Möglichkeit zum Verändern der zuvor erläuterten Ansaugposition besteht darin, wenn der Membran ein Spindeltrieb zugeordnet ist, der bevorzugt von Hand betätigbar ist, wobei die Membran durch Betätigen des Spindeltriebes relativ zu der Auslassöffnung verstellt werden kann. Bevorzugt ist die Membran hierzu, wie später noch erläutert werden wird, relativ zu der, bevorzugt zylindrischen Dosierkammerumfangswand verstellbar. Unter zylindrisch wird bevorzugt kreiszylindrisch verstanden, wobei auch Zylinder mit einer von der Kreisform abweichenden Grundfläche realisierbar sind, beispielsweise mit ovaler oder sternförmiger Grundfläche.

Insbesondere dann, wenn die Membran zum Entleeren der Dosierkammer mittels eines Aktors verstellbar ist, wird die Ansaugposition der Membran von einer die Verstellbewegung der Membran in eine Richtung von der Auslassöffnung weg begrenzende Anschlagposition definiert bzw. vorgegeben, gegen die die Membran und/oder ein Membranhalter und/oder ein bewegtes Aktorteil nach dem Entleervorgang mittels des Aktors, vorzugsweise mittels eines Linearantriebs, anschlägt bzw. zurückverstellt wird. Die vorgenannte, insbesondere obere, Anschlagposition für die Membran und/oder einem Membranhalter und/oder ein bewegtes Aktorteil, beispielsweise einen Kolben, kann beispielsweise durch Verstellen eines die Anschlagposition definierenden Anschlagelementes, beispielsweise von Hand über einen Spindeltrieb verändert bzw. eingestellt werden. Anstelle eines manuellen Antriebs zum Verstellen der vorgenannten Anschlagposition, insbesondere durch Verstellen eines Anschlagelementes, ist auch ein automatischer Antrieb hierfür realisierbar, beispielsweise ein Rotations- oder Linearantrieb.

Ganz besonders bevorzugt ist, wenn zum Verstellen der Membran relativ zu der Auslassöffnung ein Aktor, insbesondere ein Linearantrieb, vorzugsweise ein pneumatischer oder hydraulischer Kolben-Zylinderantrieb vorgesehen ist, wobei selbstverständlich auch alternativ ein rotatorischer Antrieb vorgesehen sein kann, dessen Rotationsbewegung in eine translatorische Bewegung der Membran umgesetzt wird. Bevorzugt dient der Aktor dazu, die Membran in Richtung Auslassöffnung zu verstellen, um somit nach dem Ansaugvorgang das angesaugte Pulvervolumen durch die Auslassöffnung herauszudrücken. Zusätzlich oder alternativ kann der Aktor dazu vorgesehen werden, die Ansaugposition, d.h. die Relativposition, die die Membran während des Ansaugens vom Pulver relativ zu der Auslassöffnung einnimmt, einzustellen, wobei es hierzu besonders bevorzugt, jedoch nicht zwingend ist, wenn es sich in diesem Fall bei dieser Ansaugposition der Membran nicht um eine von einer Anschlagsposition für die Membran und/oder den Membranhalter, die über ein verstellbares Anschlagelement realisiert ist, vorgegebene Position handelt, sondern stattdessen die das befüllbare Dosierkammervolumen definierende Relativposition von dem Linearantrieb gehalten wird. Im Falle des Vorsehens eines pneumatischen Antriebs als Linearantrieb ist es bevorzugt, wenn hierzu ein auf zwei voneinander abgewandten Seiten mit Druckluft beaufschlagbarer Pneumatikantrieb zum Einstellen und bevorzugt geregelten anschlagfreien Halten dieser Ansaugposition vorgesehen ist. Um den Regelungsaufwand zu minimieren, kann selbstverständlich und alternativ die Ansaugposition durch Verstellen eines fakultativen Anschlagelementes verändert werden.

Um ein optimales Entleeren der Dosierkammer mittels der Membran zu ermöglichen, ist es besonders bevorzugt, wenn der Aktor beim Entleeren mindestens eine Verstellstrecke zurücklegt, die zumindest einem Viertel, vorzugsweise zumindest der Hälfte, noch weiter bevorzugt zumindest Dreiviertel des Abstandes oder bevorzugt dem ganzen Abstand entspricht, den die Auslassöffnung zu der Membran in ihrer Ansaugstellung einnimmt.

Wie zuvor bereits angedeutet kann der Aktor zum Verstellen der Membran dazu genutzt werden die Ansaugposition der Membran einzustellen und bevorzugt auch durch Realisierung eines Regelkreises aktiv zu halten. Insbesondere für den Fall, dass die Ansaugposition nicht über einen die Verstellbewegung der Membran bzw. des Aktors begrenzenden Anschlag (Anschlagelement) für die Membran definiert ist, ist es bevorzugt, dem Aktor Steuermittel zuzuordnen, die den Aktor derart ansteuern, dass dieser die Membran an eine vorgegebene, beispielsweise in einem nicht flüchtigen Speicher hinterlegte und/oder in diesem hinterlegbare Relativposition relativ zu der Auslassöffnung verstellt und diese Position, bevorzugt geregelt beispielsweise durch geeignete Druck- und/oder Gegendruckbeaufschlagung eines Kolbens eines pneumatischen Linearantriebs hält.

Wie eingangs bereits angedeutet ist es zweckmäßig, wenn die Dosierkammer durch die Membran hindurch mit Druckluft beaufschlagbar ist, um die Membran von anhaftendem Pulver beim oder nach dem Entleerungsvorgang oder während eines Reinigungszyklusses zu befreien und/oder um eine Entleerung der Dosierkammer mittels der Membran zu unterstützen und/oder um die Dosierkammer ausschließlich (d.h. ohne Membranverstellung) durch den Einsatz von Druckluft zu entleeren.

Besonders bevorzugt ist eine weitere Ausführungsvariante der Pulverdosiereinrichtung, bei welcher der, bevorzugt langgestreckte, kolbenartige Membranhalter mindestens einen, vorzugsweise zentrischen, besonders bevorzugt ausschließlich einen, Kanal aufweist, durch den hindurch die Dosierkammer (durch die Membran hindurch) mit Unterdruck zum Ansaugen von Pulver oder mit Überdruck (Druckluft) versorgbar ist. Dabei sind an den Kanal und damit an den Membranhalter eine Unterdruckversorgungsleitung und/oder eine Druckluftversorgungsleitung angeschlossen, die gemeinsam mit dem Membranhalter bei einer Verstellbewegung des Membranhalters relativ zu Auslassöffnung verstellt werden/wird.

Bevorzugt sind der Auslassöffnung der Dosierkammer Verschlussmittel zugeordnet, die sicherstellen, dass während der Ansaugphase Pulver in ein Pulveraufnahmegefäß aus der Dosierkammer heraus gelangen kann. Für den Fall, dass während der Ansaugphase die Pulverzuführung durch die Auslassöffnung erfolgen soll können die Verschlussmittel derart ausgebildet sein, dass diese eine Verbindung zwischen der Pulverzuführleitung und der Dosierkammer während der Entleerungsphase trennen.

Ferner führt die Erfindung auf ein Pulverdosierverfahren zum Betreiben einer nach dem Konzept der Erfindung ausgebildeten, zuvor beschriebenen Pulverdosiervorrichtung, wobei es Kern des Verfahrens ist Pulver durch Unterdruckbeaufschlagung einer Dosierkammer anzusaugen. Erfindungswesentlich ist es dabei, dass die Membran zum Einstellen des Dosiervolumens und/oder zum Herausdrücken eines angesaugten Pulvervolumens aus der Dosierkammer relativ zu der Auslassöffnung verstellt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: schematische Darstellung einer Pulverdosiereinrichtung während der Ansaugphase,
- Fig. 2:: die Pulverdosiereinrichtung gemäß Fig. 1 während einer Entleerungsphase, und
- Fig. 3:: eine Darstellung der Bauteilskombination-Membranhalter/Membran sowie Dosierkammer-Umfangswand.

In den Figuren sind gleiche Elemente und Elemente mit der gleichen Funktion mit den gleichen Bezugszeichen gekennzeichnet.

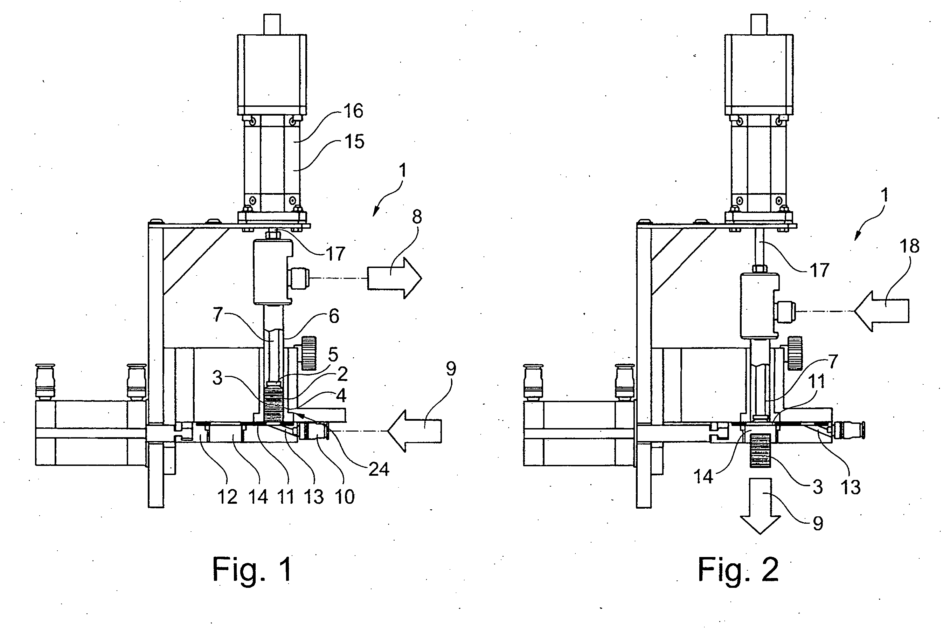

In den Fig. 1 und 2 ist eine Pulverdosiereinrichtung 1, beispielsweise zum Dosieren von pulverförmigen Medikamenten gezeigt, insbesondere um aus der dosierten Pulvermenge in einem nachgelagerten Verfahrensschritt eine Tablette zu pressen.

Die Pulverdosiervorrichtung umfasst eine kreiszylindrisch kontuierte Dosierkammer 2, deren Volumen einem (zu dosierenden) Pulverdosiervolumen 3 entspricht. Die Dosierkammer 2 ist umfangsseitig von einer aus Kunststoff, hier PTFE ausgebildeten, innenumfänglich kreiszylindrisch konturierten Umfangswand 4 begrenzt. In der Zeichnungsebene oben ist die Dosierkammer 2 von einer für das zu dosierende Pulver undurchlässigen, jedoch luftdurchlässigen Membran 5 und einem, hier hohlzylindrischen, mehrteiligen, die Membran 5 haltenden Membranhalter 6 begrenzt.

In dem hohlzylindrischen Membranhalter 6 ist ein langgestreckter Kanal 7 ausgebildet, durch welchen die Dosierkammer 2 durch die Membran 5 hindurch mit Unterdruck 8 beaufschlagbar ist, um auf diese Weise während einer Ansaugphase Pulver 9 aus einer Pulverzuleitung 10 in die Dosierkammer anzusaugen. In dem gezeigten Ausführungsbeispiel ist die Pulverzuleitung 10 derart angeordnet, dass diese über eine auf der von der Membran 5 abgewandten Seite der Dosierkammer 2 vorgesehene Auslassöffnung 11 mit der Dosierkammer 2 verbunden ist, derart, dass bei der Beaufschlagung der Dosierkammer 2 mit Unterdruck Pulver aus der Pulverzuleitung 10 durch die Auslassöffnung 11 hindurch angesaugt wird. Bei einer alternativen, nicht explizit dargestellten, sondern lediglich angedeuteten Lösung, ist die Pulverzuleitung 10, was über den Pfeil 24 angedeutet ist, in einem Bereich zwischen der Membran 5 und der Auslassöffnung 11 in die Dosierkammer 2 geführt, vorzugsweise unmittelbar benachbart zur Auslassöffnung 11 bzw. zum Boden der Dosierkammer 2.

Der Auslassöffnung 11 sind Verschlussmittel 12 in Form eines Schiebers zugeordnet, der zwischen mindestens zwei, hier ausschließlich zwei Stellpositionen senkrecht zu einer später noch zu erläuternden Verstellrichtung der Membran 5 verstellbar ist und zwar von der in Fig. 1 dargestellten Schließposition, in der die Dosierkammer 2 zwar mit der Pulverzuleitung 10 verbunden, jedoch nicht entleerbar ist und einer in Fig. 2 dargestellten Entleerungsposition, in welcher ein in dem Schieber bzw. den Verschlussmitteln 12 vorgesehener Verbindungskanal 13 zwischen der Pulverzuleitung 10 und der Auslassöffnung 11 außer Deckung mit der Auslassöffnung 11 ist und stattdessen eine Durchgangsöffnung 14 der Verschlussmittel 12 mit der Auslassöffnung 11 fluchtet, derart, dass das Pulver 9 bzw. das angesaugte Pulverdosiervolumen 3 durch die Durchgangsöffnung 14 hindurch in einem nicht dargestellten Behälter entleert, bevorzugt mechanisch herausgedrückt werden kann.

Für den Fall, dass die Pulverzuleitung 10 nicht in die Verschlussmittel 12 mündet, kann auf den Verbindungskanal 13 verzichtet werden, wobei dann in der Saugposition die Auslassöffnung 11 vollständig verschlossen ist.

Gemäß einer alternativen, nicht dargestellten Variante wird anstelle eines Schiebers als Verschlussmittel ein rotierbares Element, vorzugsweise eine rotierbare Scheibe (nicht dargestellt) eingesetzt, die an zumindest einer Position bevorzugt eine Durchgangsöffnung zum Entleeren der Dosierkammer aufweist und in einer anderen Rotationsposition bevorzugt die Auslassöffnung 11 verschließt, zumindest derart, dass diese nicht in einen Behälter hinein entleert werden kann.

Wie sich aus Fig. 1 ergibt, ist der kolbenförmige Membranhalter 6 mechanisch gekoppelt mit einem Aktor 15, hier einer pneumatischen Kolbenzylindereinheit, umfassend einen Zylinder 16 und einen ausfahrbaren Kolben 17, mit Hilfe dessen der Membranhalter 6 zusammen mit der Membran 5 relativ zur Auslassöffnung 11 innerhalb der zylindrischen Umfangswand 4 der Dosierkammer 2 in einer Axialrichtung verstellbar ist, und zwar von einer in Fig. 1 dargestellten Ansaugposition, die von der Membran 5 während des Ansaugens von Pulver eingehalten wird und einer in Fig. 2 dargestellten, in Richtung Auslassöffnung 11 verstellten Position. Zu erkennen ist dies u.a. am ausgefahrenen Kolben 17. In dem gezeigten Ausführungsbeispiel ist die Kombination aus Membran 5 und Membranhalter 6 bis an die Auslassöffnung 11 heran verfahrbar, um hierdurch das Pulvervolumen 3 mechanisch durch die Auslassöffnung und die Durchgangsöffnung 14 des in der Entleerungsposition befindlichen Verschlussmittels 11 herauszudrücken. Dieser mechanische Entleerungsvorgang mit Hilfe der Membran 5 kann unterstützt werden mit Druckluft 18, die über den Kanal 7 zur Membran 5 und durch diese hindurch in die Dosierkammer strömen kann.

Nach dem in Fig. 2 dargestellten, abgeschlossenen Entleerungsvorgang wird die Membran 5 wieder zurück in die in Fig. 1 dargestellte Ansaugposition verstellt.

Bei der Pulverdosiervorrichtung 1 gemäß den Fig. 1 und 2 ist die Ansaugposition, d.h. die Relativposition, die die Membran 5 zusammen mit dem Membranhalter 6 relativ zu der Auslassöffnung 11 beim Ansaugen von Pulver einnimmt und damit das Pulverdosiervolumen 3 (bzw. die Position, in die die Membran nach dem Entleerungsvorgang zurück verfahren wird) einstellbar. Hierzu ist der Aktor 15 mit geeigneten Steuermitteln verbunden, die die Ansaugposition durch entsprechende Druckbeaufschlagung des Kolbens einregeln. Dabei ist die Soll-Ansaugposition bevorzugt in einem nicht flüchtigen Speicher der Steuermittel abgelegt und noch weiter bevorzugt vorgebbar, so dass derselben Vorrichtung unterschiedliche Pulverdosiervolumina dosiert werden können.

Gemäß einer alternativen, nicht dargestellten Variante wird die Ansaugposition der Membran 5 nicht über eine geeignete Regelung des Aktors 15 realisiert, sondern durch manuelle oder aktuierte Verstellung eines oberen Anschlags (Anschlagelement) für den Kolben 17 des Aktors 15 oder für den Membranhalter 6.

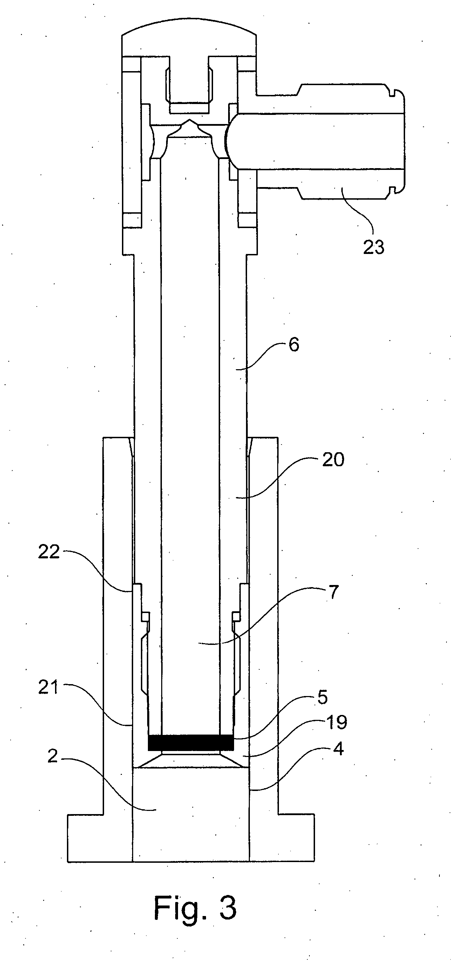

In Fig. 3 ist der Membranhalter 6 zusammen mit der Membran 5 im Detail gezeigt. Die Membran 5 ist axial geklemmt zwischen einem unteren bzw. äußeren Membranhalterteil 19 und einem in ein Innengewinde des unteren Membranhalterteils 19 einschraubbaren oberen Membranhalterteil 20, in welchem der Kanal 7 für Druckluft und/oder Unterdruck zur entsprechenden Versorgung der Dosierkammer 2 ausgebildet ist.

Zu erkennen ist, dass sich der Membranhalter 6, genauer das untere Membranhalterteil 19 (alternativ oder zusätzlich das obere Membranhalterteil 20) unmittelbar, d.h. ohne Dazwischenanordnung einer elastomeren Ringdichtung an der hier aus PTFE ausgebildeten zylindrischen Umfangswand 4 der Dosierkammer 2 dichtend abstützt und bei der Verstellbewegung der Membran 5 in axialer Richtung an dieser entlanggleitet. In dem gezeigten Ausführungsbeispiel ist der Membranhalter 6 aus Metall, beispielsweise Aluminium oder Edelstahl ausgebildet und stützt sich in einem unteren Ringbereich 21 sowie in einem axial davon beabstandeten, oberen Ringbereich 22 in radialer Richtung dichtend an der Umfangswand 4 ab.

Zu erkennen ist, dass hier, abgewinkelt zum Kanal 7 ein Anschluss 23 am Membranhalter 6 vorgesehen ist, an den eine Unter- und/oder Überdruckversorgung anschließbar ist.

### Bezugszeichenliste

- 1: Pulverdosiervorrichtung
- 2: Dosierkammer
- 3: Pulverdosiervolumen
- 4: Umfangswand
- 5: Membran
- 6: Membranhalter
- 7: Kanal
- 8: Unterdruck
- 9: Pulver
- 10: Pulverzuleitung
- 11: Auslassöffnung
- 12: Verschlussmittel
- 13: Verbindungskanal
- 14: Durchgangsöffnung
- 15: Aktor
- 16: Zylinder
- 17: Kolben
- 18: Druckluft
- 19: unteres Membranhalterteil
- 20: oberes Membranhalterteil
- 21: unterer Ringbereich
- 22: oberer Ringbereich
- 23: Anschluss
- 24: Pfeil

## Patentansprüche

1. Pulverdosiervorrichtung, umfassend eine ein Pulverdosiervolumen (3) definierende Dosierkammer (2), die durch eine Auslassöffnung (11) hindurch entleerbar ist, wobei die Dosierkammer (2) zum Ansaugen von Pulver (9) aus einer Pulverzuleitung (10) durch eine die Dosierkammer (2) begrenzende Membran (5) hindurch mit Unterdruck (8) beaufschlagbar ist, wobei die Membran (5) zusammen mit einem Membranhalter (6), an welchem die Membran (5) fixiert ist, zum Einstellen des Pulverdosiervolumens (3) und/oder zum Entleeren der Dosierkammer (2) relativ zu der Auslassöffnung (11) verstellbar angeordnet ist, wobei der Membranhalter (6) beim Relativverstellen der Membran (5) gegenüber einer, vorzugsweise zylindrischen, Umfangswand (4) der Dosierkammer (2) abgedichtet ist,
**dadurch gekennzeichnet,**
**dass** die Umfangswand (4) der Dosierkammer (2) aus einem elastischeren Material als der Membranhalter (6) ausgebildet ist, und dass keine separaten Elastomerdichtungen zum Abdichten des Membranhalters (6) gegenüber der Umfangswand (4) vorgesehen sind.

2. Pulverdosiervorrichtung nach Anspruch 1,
**dadurch gekennzeichnet,**
**dass** eine Relativposition, die die Membran (5) während des Ansaugens von Pulver (9) relativ zu der Auslassöffnung (11) einnimmt stufenlos oder in definierten Stufen einstellbar ist.

3. Pulverdosiervorrichtung nach Anspruch 2,
**dadurch gekennzeichnet,**
**dass** die Relativposition, die die Membran (5) während des Ansaugens von Pulver (9) relativ zu der Auslassöffnung (11) einnimmt, automatisch oder manuell, insbesondere über einen von Hand betätigbaren Spindeltrieb, insbesondere durch Verstellen eines eine Anschlagposition für die Membran (5) und/oder den Membranhalter (6) und/oder ein bewegtes Aktorteil definierenden Anschlagelementes, einstellbar ist.

4. Pulverdosiervorrichtung nach einem der vorhergehenden Ansprüche,
**dadurch gekennzeichnet,**
**dass** der Membran (5) zum Verstellen relativ zu der Auslassöffnung (11) ein Aktor (15), insbesondere ein Linearantrieb, vorzugsweise ein pneumatischer oder hydraulischer Kolben-Zylinderantrieb, oder ein elektrischer Linearantrieb, zugeordnet ist.

5. Pulverdosiereinrichtung nach Anspruch 4,
**dadurch gekennzeichnet,**
**dass** die Membran (5) mittels des Aktors (15) zum Entleeren eines Pulvervolumens aus der Dosierkammer (2) in Richtung Auslassöffnung (11) über eine Verstellstrecke verstellbar ist, die zumindest einem Viertel, vorzugsweise mindestens der Hälfte, noch weiter bevorzugt mindestens Dreiviertel des Abstandes zwischen der Auslassöffnung (11) und der Relativposition der Membran (5) während des Ansaugens entspricht.

6. Pulverdosiereinrichtung nach einem der vorhergehenden Ansprüche 4 oder 5, **dadurch gekennzeichnet,**
**dass** dem Aktor (15) Steuermittel zugeordnet sind, die den Aktor (15) derart ansteuern, dass dieser die Membran (5) an eine vorgegebene, beispielsweise in einem Speicher hinterlegte und/oder hinterlegbare, Relativposition verstellt in der Pulver (9) angesaugt wird.

7. Pulverdosiereinrichtung nach Anspruch 6,
**dadurch gekennzeichnet,**
**dass** die Steuermittel den Aktor (15) derart ansteuern, dass dieser die Membran in der Relativposition, insbesondere mittels eines Regelkreises geregelt hält.

8. Pulverdosiereinrichtung nach einem der vorhergehenden Ansprüche,
**dadurch gekennzeichnet,**
**dass** die Dosierkammer (2) durch die Membran (5) hindurch, vorzugsweise zum Entleeren eines Pulvervolumens aus der Dosierkammer (2) oder zum Unterstützen einer Entleerung des Pulvervolumens durch Verstellen der Membran (5), mit Druckluft (18) beaufschlagbar ist.

9. Pulverdosiereinrichtung nach einem der vorhergehenden Ansprüche,
**dadurch gekennzeichnet,**
**dass** der Membranhalter (6), an den die Membran (5) fixiert ist, kolbenartig ein- oder mehrteiligen ist.

10. Pulverdosiereinrichtung nach einem der vorhergehenden Ansprüche,
**dadurch gekennzeichnet,**
**dass** der Membranhalter (6) aus Metall und/oder die Umfangswand (4) der Dosierkammer (2) aus Kunststoff, insbesondere aus PTFE, ausgebildet sind/ist.

11. Pulverdosiereinrichtung nach einem der vorhergehenden Ansprüche,
**dadurch gekennzeichnet,**
**dass** sich der Membranhalter (6) über mindestens einen, bevorzugt metallischen, Ringbereich (21, 22), vorzugsweise über mindestens zwei in einer Verstellrichtung beabstandete, bevorzugt metallische, Ringbereiche (21, 22), unmittelbar an der Umfangswand (4) der Dosierkammer (2) abstützt.

12. Pulverdosiereinrichtung nach einem der vorhergehenden Ansprüche,
**dadurch gekennzeichnet,**
**dass** der Membranhalter (6) mindestens einen, vorzugsweise ausschließlich einen, Kanal (7) aufweist, durch den hindurch die Dosierkammer (2) mit Unterdruck (8) zum Ansaugen von Pulver (9) oder mit Überdruck versorgbar ist.

13. Pulverdosiereinrichtung nach einem der vorhergehenden Ansprüche,
**dadurch gekennzeichnet,**
**dass** die Membran (5) axial zwischen zwei, vorzugsweise miteinander verschraubbaren, Membranhalterteilen (19, 20) des Membranhalters (6) klemmend aufgenommen ist.

14. Pulverdosiereinrichtung nach einem der vorhergehenden Ansprüche,
**dadurch gekennzeichnet,**
**dass** der Auslassöffnung (11) Verschlussmittel (12), insbesondere in Form eines translatorisch verstellbaren Schiebers oder eines rotierbaren, bevorzugt scheibenförmigen Elementes, zugeordnet sind, mit welchen die Auslassöffnung (11) zum Entleeren der Dosierkammer (2) freigebbar ist und/oder mit denen eine Verbindung zwischen der Pulverzuführleitung und der Dosierkammer (2) trennbar und/oder herstellbar ist.

15. Pulverdosierverfahren, zum Betreiben einer Pulverdosiervorrichtung (1) nach einem der vorhergehenden Ansprüche, wobei Pulver (9) mit Hilfe von Unterdruck (8) in die von einer Membran (5) begrenzte, eine Auslassöffnung (11) aufweisende Dosierkammer (2) angesaugt wird, wobei die Membran (5) zusammen mit einem Membranhalter (6) zum Einstellen des Dosiervolumens und/oder zum Herausdrücken eines angesaugten Pulvervolumens aus der Dosierkammer (2) relativ zu der Auslassöffnung (11) verstellt wird.

## Claims

1. A powder metering device, comprising a metering chamber (2) which defines a powder metering volume (3) and which can be emptied through an outlet opening (11), wherein the metering chamber (2) can be subjected to an underpressure (8) in order to suck in powder (9) from a powder supply line (10) through a diaphragm (5) bounding the metering chamber (2), wherein the diaphragm (5) together with a diaphragm holder (6), to which the diaphragm (5) is fixed, is disposed adjustable relative to the outlet opening (11) in order to set the powder metering volume (3) and/or to empty the metering chamber (2), wherein the diaphragm holder (6) is sealed, during the relative adjustment of the diaphragm (5), with respect to a preferably cylindrical, circumferential wall (4) of the metering chamber (2),
**characterised in that**
the circumferential wall (4) of the metering chamber (2) is constituted by a more elastic material than the diaphragm holder (6), and that no separate elastomer seals are provided for sealing the diaphragm holder (6) with respect to the circumferential wall (4).

2. The powder metering device according to claim 1,
**characterised in that**
a relative position which the diaphragm (5) assumes relative to the outlet opening (11) during the sucking-in of powder (9) can be adjusted steplessly or in defined steps.

3. The powder metering device according to claim 2,
**characterised in that**
the relative position which the diaphragm (5) assumes relative to the outlet opening (11) during the sucking-in of powder (9) can be adjusted automatically or manually, in particular by means of a manually operated spindle drive, in particular by adjusting a stop element which defines a stop position for the diaphragm (5) and/or the diaphragm holder (6) and/or a mobile actuator part.

4. The powder metering device according to any one of the preceding claims,
**characterised in that**
an actuator (15), in particular a linear drive, preferably a pneumatic or hydraulic piston-cylinder drive, or an electric linear drive, is assigned to the diaphragm (5) for the adjustment relative to the outlet opening (11).

5. The powder metering device according to claim 4,
**characterised in that**,
for the emptying of a powder volume out of the metering chamber (2), the diaphragm (5) can be adjusted by means of the actuator (15) in the direction of the outlet opening (11) over an adjustment path which corresponds to at least a quarter, preferably at least half, still more preferably at least three quarters of the distance between the outlet opening (11) and the relative position of the diaphragm (5) during the sucking-in.

6. The powder metering device according to any one of preceding claims 4 or 5,
**characterised in that**
control means are assigned the actuator (15), said control means controlling the actuator (15) in such a way that the latter sets the diaphragm (5) in a preselected relative position, for example stored and/or capable of being stored in a memory, in which relative position powder (9) is sucked in.

7. The powder metering device according to claim 6,
**characterised in that**
the control means control the actuator (15) in such a way that the latter keeps the diaphragm in the relative position, in particular controlled by means of a control circuit.

8. The powder metering device according to any one of the preceding claims,
**characterised in that**
the metering chamber (2) is acted upon by compressed air (18) through the diaphragm (5), preferably for emptying a powder volume from the metering chamber (2) or for assisting the emptying of the powder volume by adjusting the diaphragm (5).

9. The powder metering device according to any one of the preceding claims,
**characterised in that**
the diaphragm, holder (6), to which the diaphragm (5) is fixed, is one-part or multi-part piston-like.

10. The powder metering device according to any one of the preceding claims,
**characterised in that**
the diaphragm holder (6) is made of metal and/or the circumferential wall (4) of the metering chamber (2) is made of plastic, in particular of PTFE.

11. The powder metering device according to any one of the preceding claims,
**characterised in that**
the diaphragm holder (6) is supported directly on the circumferential wall (4) of the metering chamber (2) by at least one preferably metallic annular region (21, 22), preferably by at least two preferably metallic annular regions (21, 22) spaced apart in an adjustment direction.

12. The powder metering device according to any one of the preceding claims,
**characterised in that**
the diaphragm holder (6) comprises at least one, preferably only one channel (7), through which the metering chamber (2) can be supplied with underpressure (8) for sucking in powder (9) or with excess pressure.

13. The powder metering device according to any one of the preceding claims,
**characterised in that**
the diaphragm (5) is accommodated axially in a clamping manner between two diaphragm holder parts (19, 20) of the diaphragm holder (6), said diaphragm holder parts preferably being able to be screwed together.

14. The powder metering device according to any one of the preceding claims,
**characterised in that**
there are assigned to the outlet opening (11) closure means (12), in particular in the form of a slide gate adjustable in a translatory manner or a rotatable, preferably disc-shaped element, with which closing means the outlet opening (11) can be opened for the emptying of the metering chamber (2) and/or with which a connection can be cut off and/or created between the powder supply line and the metering chamber (2).

15. A powder metering method for operating a powder metering device (1) according to any one of the preceding claims, wherein powder (9) is sucked with the aid of underpressure (8) into the metering chamber (2) bounded by a diaphragm (5) and comprising an outlet opening (11), wherein the diaphragm (5) together with a diaphragm holder (6) is adjusted relative to the outlet opening (11) in order to set the metering volume and/or to push a sucked-in powder volume out of the metering chamber (2).

## Revendications

1. Dispositif de dosage de poudre, comprenant une chambre de dosage (2) définissant un volume de dosage de poudre (3) et qui peut être vidée par un orifice d'évacuation (11), la chambre de dosage (2) pouvant être sollicitée par dépression (8) pour aspirer de la poudre (9) se trouvant dans une conduite d'alimentation en poudre (10) à travers une membrane (5) limitant la chambre de dosage (2), la membrane (5) étant disposée de manière réglable par rapport à l'orifice d'évacuation (11), en même temps qu'un support de membrane (6) sur lequel la membrane (5) est fixée, pour le réglage du volume de dosage de poudre (3) et/ou pour le vidage de la chambre de dosage (2), le support de membrane (6) étant, lors d'un déplacement relatif de la membrane (5), isolé d'une paroi circonférentielle (4) de préférence cylindrique, de la chambre de dosage (2),
**caractérisé en ce que**
la paroi circonférentielle (4) de la chambre de dosage (2) est constituée d'un matériau plus élastique que le support de membrane (6) et **en ce qu'**il n'est prévu aucun joint élastomère séparé pour isoler le support de membrane (6) de la paroi circonférentielle (4).

2. Dispositif de dosage de poudre selon la revendication 1,
**caractérisé en ce**
**qu'**une position relative que prend la membrane (5) pendant l'aspiration de poudre (9) par rapport à l'orifice d'évacuation (11) est réglable progressivement ou par paliers définis.

3. Dispositif de dosage de poudre selon la revendication 2,
**caractérisé en ce que**
la position relative que prend la membrane (5) pendant l'aspiration de poudre (9) par rapport à l'orifice d'évacuation (11) est réglable automatiquement ou manuellement, en particulier à l'aide d'un mécanisme à broche actionnable à la main, en particulier en déplaçant un élément de butée définissant une position de butée pour la membrane (5) et/ou le support de membrane (6) et/ou un élément actionneur en mouvement.

4. Dispositif de dosage de poudre selon l'une quelconque des revendications précédentes,
**caractérisé en ce**
**qu'**un actionneur (15), en particulier une commande linéaire, de préférence une commande à piston et cylindre pneumatique ou hydraulique ou une commande linéaire électrique, est associé à la membrane (5) pour la déplacer par rapport à l'orifice d'évacuation (11).

5. Dispositif de dosage de poudre selon la revendication 4, **caractérisé en ce que**
la membrane (5) est déplaçable au moyen de l'actionneur (15) pour vider un volume de poudre de la chambre de dosage (2) en direction de l'orifice d'évacuation (11) sur un parcours de réglage qui équivaut au moins à un quart, de préférence au moins la moitié, encore plus préférentiellement au moins trois quarts, de la distance entre l'orifice d'évacuation (11) et la position relative de la membrane (5) pendant l'aspiration.

6. Dispositif de dosage de poudre selon les revendications 4 ou 5,
**caractérisé en ce que**
sont associés à l'actionneur (15) des moyens de commande qui commandent l'actionneur (15) de manière à ce que celui-ci aspire la membrane (5) vers une position relative prédéfinie, par exemple déposée et/ou pouvant être déposée dans une position relative, en la déplaçant dans la poudre (9).

7. Dispositif de dosage de poudre selon la revendication 6,
**caractérisé en ce que**
les moyens de commande commandent l'actionneur (15) de manière à ce que celui-ci maintienne la membrane réglée dans la position relative, en particulier au moyen d'un circuit de réglage.

8. Dispositif de dosage de poudre selon l'une quelconque des revendications précédentes,
**caractérisé en ce que**
la chambre de dosage (2) peut être sollicitée à travers la membrane (5), de préférence pour vider un volume de poudre de la chambre de dosage (2) ou pour aider à vider le volume de poudre en déplaçant la membrane (5) avec de l'air comprimé (18).

9. Dispositif de dosage de poudre selon l'une quelconque des revendications précédentes,
**caractérisé en ce que**
le support de membrane (6) sur lequel la membrane (5) est fixée est en forme de piston fait d'une ou plusieurs pièces.

10. Dispositif de dosage de poudre selon l'une quelconque des revendications précédentes,
**caractérisé en ce que**
le support de membrane (6) est composé de métal et/ou la paroi circonférentielle (4) de la chambre de dosage (2) est composée de plastique, en particulier de PTFE.

11. Dispositif de dosage de poudre selon l'une quelconque des revendications précédentes,
**caractérisé en ce que**
le support de membrane (6) s'appuie par au moins une zone annulaire (21, 22), de préférence métallique, préférentiellement par au moins deux zones annulaires (21, 22) de préférence métalliques, espacées dans un sens de déplacement, directement sur la paroi circonférentielle (4) de la chambre de dosage (2).

12. Dispositif de dosage de poudre selon l'une quelconque des revendications précédentes,
**caractérisé en ce que**
le support de membrane (6) présente au moins un, de préférence uniquement un, canal (7) à travers lequel la chambre de dosage (2) peut recevoir de la dépression (8) pour aspirer de la poudre (9) ou de la surpression.

13. Dispositif de dosage de poudre selon l'une quelconque des revendications précédentes,
**caractérisé en ce que**
la membrane (5) est reçue axialement serrée entre deux pièces de support de membrane (19, 20) pouvant de préférence être vissées axialement ensemble, du support de membrane (6).

14. Dispositif de dosage de poudre selon l'une quelconque des revendications précédentes,
**caractérisé en ce que**
sont associés à l'orifice d'évacuation (11) des moyens de fermeture (12), en particulier sous la forme d'une tirette réglable en translation ou d'un élément rotatif, de préférence en forme de disque, et grâce auxquels l'orifice d'évacuation (11) peut être débloqué pour vider la chambre de dosage (2) et/ou grâce auxquels une liaison entre la conduite d'acheminement de poudre et la chambre de dosage (2) peut être coupée et/ou établie.

15. Procédé de dosage de poudre pour l'utilisation d'un dispositif de dosage de poudre (1) selon l'une quelconque des revendications précédentes, dans lequel de la poudre (9) est aspirée à l'aide de dépression (8) vers la chambre de dosage (2) limitée par une membrane (5) et présentant un orifice d'évacuation (11), dans lequel la membrane (5) est déplacée en même temps qu'un support de membrane (6) pour régler le volume de dosage et/ou pour expulser un volume de poudre aspiré de la chambre de dosage (2) par rapport à l'orifice d'évacuation (11).
